# EUROPEAN PATENT APPLICATION

(11) **EP 2 527 532 A1**
(43) Date of publication of application: **28.11.2012**
(21) Application number: 11460028.1
(22) Date of filing: 27.05.2011
(51) Int. Cl.: D21C 11/00, C10L 1/02, C08H 8/00

(54) **Method of processing of stalks of fibre crops**

(71) Applicant: "Efa Gryt" Ewa Gryt, 41-409 Myslowice (PL)
(72) Inventor: Gryt, Ewa, 40-660 Katowice (PL); Foss, Eugeniusz, 86-011 Tryszczyn (PL)
(74) Representative: Karczmitowicz, Teresa Ewa

(57) **Abstract**

The invention refers to a method of processing of stalks of fibre crops, in particular hemp and/or flax, with production of cellulose, ethanol as a 2nd generation fuel, and feeder yeast with high protein concentration. The method of processing of stalks of fibre crops consists in combining of modified sulphite or sulphate methods with methods of purification of spent digesting liquor, its alcoholic and yeast fermentation, and subsequently, after another purification, its returning to the process. Basic technology is supplemented with special procedure of raw material preparation, which increases efficiency of manufacture and quality of the products. Invented method may be applied in paper and cellulose industry. The method according to the invention is in principle waste-free and very elastic, which enables changes of proportions between manufactured products in wide range.

## Description

The invention consists of a method of processing of stalks of fibre crops, in particular hemp and/or flax, with production of cellulose, ethanol and yeast.

Cellulose is a polysaccharide which is an unbranched natural biopolymer, consisting of several hundreds up to several hundreds of thousands mainly glucose residues, β-1,4-glycoside bounded. Cellulose is a fibrous pulp, insoluble in water and common organic solvents, while it is moderately reactive, among others undergoing reactions of esterification, etherification, acetalation, and subjected to acids in water solution cellulose undergoes depolymerization. Cellulose is a main element of cellular membrane and cellular wall of higher plants and it occurs with other supportive substances like lignin, pectins or hemicelluloses. Most rich in cellulose are cotton fibres, even above 90%, hemp or flax stalks contain about 70%, and wood contains about 50% of cellulose.

Lignin, apart from cellulose and hemicelluloses, is one of basic elements of plants. It is a gluing substance, securing compact structure of cells, it provides them with compression strength and maintains stiffness of cells. It is a polymer of irregular structure with macroparticle branching, and its chemical structure shows variability and species specificity. It contains various functional groups responsible for considerable reactivity of lignin, such as methoxyl, hydroxyl, carboxyl, ether groups.

Hemicelluloses constitute non-homogeneous group of polysaccharides and their derivatives, bounded with β-glycoside bounds and making branched chains, and their name originates from chemical and structural similarity to cellulose. They belong to main constituents of cellular walls in plants. Hemicelluloses have smaller level of polymerization than cellulose, lower regularity and level of ordering of structure, which makes them less resistant to diluted acids which hydrolyse them, and in contrary to cellulose, hemicelluloses dissolve in diluted alkalies.

On commercial scale cellulose is manufactured from plants, mainly from wood in a delignification process which consists of separation of lignin and other components of plants from cellulose. Widely known are two basic methods of manufacture of alkali cellulose, named after chemicals applied in production a sulphate method or a sulphite method. The AAS (alcohol-based ammonia sulphate) method is also known and used.

Quality of cellulose after delignification depends mainly from lignin content and it is usually measured with a Kappa number describing quantity of easily oxidable impurities. Usually cellulose after delignification still contains too much of lignin, which introduces a tint. Therefore cellulose is exposed to a process of oxidizing bleaching with strong oxidizers such as chlorine, chlorine dioxide, hydrogen peroxide.

The stalks of fibre crops contain about 50% more of cellulose than wood commonly used in production of cellulose. Application of typical methods to processing of stalks of fibre crops creates problems, because if compared to wood they are characterised with considerably higher content of pectins and fatty substances. In particular pectins which are polysaccharides of variable composition and are build mostly from mers of D-galacturonic acid in big part esterificated with the methyl groups, are a reason of many problems in processing of fibres harvested from the stalks of fibre crops. Also character of lignins comprised in the stalks of fibre crops induces a tendency to browning of the cellulose pulp, therefore for delignification of the stalks of fibre crops usually alkaline solutions of hydrogen peroxide are used. Description of Polish patent PL 173943 discloses a method of manufacture of bleached long fibre cellulose pulp from fibres separated from straw of fibre crops, consisting of two steps. In first step the fibres are subjected to alkaline-peroxide delignification, and in second step to bleaching with hydrogen peroxide in alkaline environment.

Another Polish patent PL 197602 discloses a method of manufacture of long fibred bleached cellulose pulp from fibres of fibre crops, consisting in rough extraction of pectins with a solution of sodium or potassium hydroxide followed by delignification with alkaline solution of hydrogen peroxide containing diethylenetriaminepentaacetic acid or ethylenediaminetetraacetic acid and optionally sodium or potassium silicate and magnesium sulfate. Delignification method with alkaline solutions of hydrogen peroxide is a mild one and requires raw material with low content of lignin, while bleaching of manufactured cellulose pulp is still necessary.

Main drawback of these methods is a necessity to use expensive reagents and creation of big quantities of wastes, originating mainly in cellulose bleaching.

According to the invention a method of processing of stalks of fibre crops, in particular hemp and/or flax, with production of cellulose, ethanol and yeast, consists in delignification of stalks in a temperature from 110°C to 180°C with digesting liquor, which is a solution of sodium and/or potassium bisulphate (IV) or a solution of sodium and/or potassium bisulphate (VI) with pH between 1 and 13.5, containing from 0.01% to 0.03% (mass fraction) of magnesium ions Mg⁺², for obtaining in digesting liquor above 30% (mass fraction) of soluble carbohydrates. Then cellulose is separated and rinsed, and spent digesting liquor is treated with a mixture of calcium oxide or hydroxide and magnesium oxide, with mass fraction of these oxides from 30% to 70%, in a quantity from 20kg to 70kg of mixture per 1m³ of digesting liquor. After separation of precipitated deposit clear fluid is directed to alcoholic fermentation, while the deposit is burned. Obtained combustion gases are returned to delignification, and an ash is returned for purification of spent digesting liquor and for supplementary source of ions Ca⁺² and Mg⁺² to fresh digesting liquor. The spent wash after distillation of ethanol is subjected to yeast fermentation, then the yeast is separated, and the solution is purified and returned to the process.

The delignification process may be run in acid digesting liquor of pH between 1 and 4 in the temperature from 110°C to 145°C, advantageously 125°C, in inactive digesting liquor at pH from 5 up to 8 in the temperature of 150°C to 180°C, preferably 135°C, or in alkaline digesting liquor at pH between 9 and 13.5 in the temperature of 150°C to 180°C, preferably 150°C.

Advantageously before delignification the stalks of fibre crops are boiled for 0.5 up to 2 hours in the temperature no less than 100°C in water with addition of 5dm³ - 15dm³ of 25% ammonia liquor per 1Mg of stalks. Then after cooling to the temperature of 28°C it is treated with acid whey in an amount of 80dm³ to 120dm³ per 1Mg of stalks and it is soured in a dump or in adjusted sleeves. Subsequently, an ensilage with addition of water is boiled for 0.5 up to 2 hours in the temperature no less than 110°C, then it is cooled to the temperature required for a liquefying enzyme, the liquefying enzyme is added and it is further cooled to the temperature required for a saccharificating enzyme, and the saccharificating enzyme is added. In next step the mixture is separated and the solution is directed to alcoholic fermentation and/or yeast fermentation, while pre-processed stalks are directed to delignification.

Advantageously delignification is run in a multistage process, most advantageously in three stages, and where digesting liquor flows through subsequent stages in continuous system. Fresh digesting liquor is contacted with stalks of fibre crops, but in last stage fresh stalks of fibre crops are contacted with most spent digesting liquor. The content of soluble carbohydrates in digesting liquor after first step of delignification in terms of mass fraction amounts to 10% up to 15%, whereas after last step of delignification - 30% up to 35%. Advantageously the cellulose pulp after delignification run with a solution of sodium and/or potassium bisulphate (VI) followed by rinsing in water is additionally rinsed with a solution of mass concentration of 30% to 50% of sodium and/or potassium bisulphate (IV), containing from 0.1% to 0.3% (mass fraction) of magnesium ions Mg⁺², and then it is rinsed with water.

Advantageously spent digesting liquor after purification with a mixture of calcium oxide and magnesium oxide is saturated with carbon dioxide to pH 7.0±0.5, and subsequently precipitated deposit of calcium carbonate is removed, while clear solution is concentrated to concentration of at least 35%, the crystals of sodium hydrogen carbonate are isolated and the solution is directed to alcoholic fermentation and/or to yeasting process.

Advantageously after isolation of yeast from spent fermentation solution, the milk of lime is added to reach pH above 8.5. Precipitated deposit is removed and added to the yeast pulp, whereas clear fluid is saturated with carbon dioxide, and calcium carbonate precipitated in the process is isolated. Clear fluid is directed subsequently to preparation of digesting liquor, delignification, cellulose rinsing and pre-souring of stalks.

The method according to the invention is practically waste-free and it enables combined production of high quality cellulose needing no bleaching, bio-ethanol as a second generation fuel, and yeast being valuable protein feed. The method is flexible and it enables to change proportions of manufactured products in wide range.

The invention is illustrated with following embodiments.

Example 1. The hemp straw is cut into chaff and additionally grinded in a mill. Delignification is run in 4 horizontal boilers with stirrers mounted on shafts. Digesting liquor for delignification consists of 50 mass parts of NaHSO₃ and 50 mass parts of water with addition of 1.0kg of MgCl₂ for 1m³ of digesting liquor. Digesting liquor prepared this way has pH equal to 4.8. Digesting liquor in a quantity of 2Mg for 1Mg of chaff is put into the boiler I and heated to the temperature of 135°C. After 5 hours of kiering one finds in digesting liquor with use of a refractometer a content of 15% of soluble carbohydrates, and digesting liquor is directed from the boiler I to the boiler II. Simultaneously fresh digesting liquor is delivered to the boiler I with a speed of 0.4Mg/h. After 5 hours of kiering in the temperature of 145°C, in the boiler II the concentration of 25% of carbohydrates soluble in digesting liquor is reached and the liquor is directed to the boiler III. After subsequent 5 hours of kiering in the boiler III, in the temperature of 145°C, digesting liquor reaches a content of soluble carbohydrates equal to 31 %. At this moment removing of spent digesting liquor begins. The quantity of removed digesting liquor ensures stabilisation of the liquor levels in the boilers. After 15 hours cellulose in the boiler I is characterised with the Kappa number of 0.9 and if so, fresh digesting liquor is supplied to the boiler II, the liquor is pumped from the boiler I to the boiler II while the boiler IV is switched on. The liquor from the boiler III is removed into the boiler IV. After expansion the cellulose pulp from the boiler I is filtered and rinsed with a process water, and finally it is dried. Efficiency of cellulose production is characterised by a mass fraction of 68% in relation to the straw, the cellulose has light shade and the Kappa number of 0.9. Spent digesting liquor after filtration is directed to the stirrer, where the mixture of calcium oxide and magnesium oxide of mass fraction of 50% in an amount of 2.5kg of mixture per 1m³ of digesting liquor is added. Obtained suspension of calcium and magnesium lignosulphonates in the liquor is filtered, the precipitate is burned, and remaining mixture of calcium and magnesium oxides is used for purification of spent digesting liquor. The combustion gases containing SO₂ are directed to preparation of fresh digesting liquor. Purified spent digesting liquor is saturated with carbon dioxide released during fermentation to pH 7.0, and precipitated deposit of calcium carbonate and magnesium carbonate is filtered out. Next, the filtrate is condensed to mass fraction of 50% and after cooling sodium hydrogen carbonate crystals are filtered out. Purified in this manner, spent digesting liquor is subjected to alcoholic fermentation with yeast B4 and Bc16a for 72 hours. The fermentation broth is distilled and raw spirit with ethanol volume concentration of 92% is obtained with efficiency of 7% in relation to initial hemp straw. The spent wash after distilling of ethanol is subjected to yeast fermentation with use of seed yeast of type Candida, Trichosporon and Kluyveromyces. Produced yeast is filtered out and dried. Finally one obtains feeder yeast with efficiency of 8.4% in relation to initial hemp straw, with protein mass content of 50%. The filtrate is alkalized with a milk of lime up to pH 9.5, and subsequently precipitated deposit is separated, whereas clear fluid is acidified with carbon dioxide from alcoholic fermentation and precipitated whitewash is removed. Received pure filtrate, which is a process water, characterized by oxygen biological requirement BZT₅ equal to 80, is used in preparation of raw materials and in cellulose rinsing.

Example 2. Fresh hemp straw is cut into chaff and boiled in closed boiler during 1 hour with 25% ammonia water in quantity of 5dm³/1Mg. Then the content of the boiler is stacked in a dump and after cooling to the temperature of 28°C it is treated with acid whey in an amount of 100dm³/1Mg and it is soured.

Soured chaff of hemp straw is additionally grinded and mixed with water in a quantity facilitating pumping of grinded straw, and the mixture is heated for one hour to the temperature of 120°C. Then it is cooled to the temperature of 92°C and fluidising enzyme is added, and subsequently it is again cooled to the temperature of 60°C and saccharificating enzyme is added. The mixture is separated on rotating sieve and pre-processed chaff of hemp straw is directed to the heat boilers for delignification, while the filtrate is directed to ethanol fermentation. Following procedure is like in Example 1.

Obtained products are: cellulose of pale shade and Kappa number of 0.9, with efficiency in terms of mass fraction of 68% related to the straw, raw spirit with ethanol volume concentration of 92% and efficiency of 7% in relation to initial hemp straw, and feeder yeast containing the protein mass of 50%, with efficiency of 8.4% related to raw hemp straw.

Example 3. Hemp straw cut to chaff and additionally grinded in the mill is used for delignification, and the process is run in 4 vertical boilers with rotational pump. Digesting liquor containing 30 mass parts of sodium bisulphate (VI) (NaHSO₄) and 50 parts of water, NaOH to obtain pH equal to 9.5, and 1,0kg MgCl₂ and 1,0kg CaO per 1m³ of liquor, is applied for kiering. Further procedure is the same as in Example 1, but the temperature is equal to 165°C, and cellulose pulp is additionally rinsed after delignification with sodium bisulphate (IV) solution of mass concentration 50%, containing 0.2% (mass fraction) of magnesium ions Mg⁺², and then it is rinsed with water.

The products obtained in this process are: cellulose of light shade and Kappa number of 0.9, with efficiency in terms of mass fraction of 68% related to the straw, raw spirit with ethanol volume concentration of 92% and efficiency of 7% in relation to initial hemp straw, and feeder yeast containing the protein mass of 50%, with efficiency of 8.4% related to raw hemp straw.

## Claims

1. A method of processing of stalks of fibre crops, in particular hemp and/or flax, with production of cellulose, ethanol and yeast, by means of sulphite or sulphate delignification method, where cellulose is separated and rinsed, while digesting liquor is subjected to alcoholic fermentation, and the wash remaining after distillation of ethanol is subjected to the yeast fermentation, the yeast is removed and the solution is purified **characterised in that** delignification is run in the temperature from 110°C to 180°C with digesting liquor, which is a solution of sodium and/or potassium bisulphate (IV) or a solution of sodium and/or potassium bisulphate (VI) with pH between 1 and 13.5, containing from 0.01% to 0.03% (mass fraction) of magnesium ions Mg⁺², for obtaining in digesting liquor above 30% (mass fraction) of soluble carbohydrates, then after separation of cellulose, spent digesting liquor is treated with a mixture of calcium oxide and magnesium oxide, with mass fraction of magnesium oxide from 30% to 70%, in a quantity from 20kg to 70kg of mixture per 1m³ of digesting liquor, and after separation of precipitated deposit clear fluid is directed to alcoholic fermentation, while the deposit is burned and obtained combustion gases are returned to delignification, and where an ash is returned for purification of spent digesting liquor and as a supplementary source of ions Ca⁺² and Mg⁺² to fresh digesting liquor.

2. The method according to claim 1 **characterised in that** before delignification the stalks of fibre crops are boiled for 0.5 up to 2 hours in the temperature no less than 100°C in water with addition of 5dm³ to 15dm³ of 25% ammonia liquor per 1Mg of stalks, then after cooling to the temperature of 28°C it is treated with acid whey in an amount of 80dm³ to 120dm³ per 1Mg and it is soured, subsequently an ensilage with addition of water is boiled for 0.5 up to 2 hours in the temperature no less than 110°C, then it is cooled to the temperature required for a liquefying enzyme, the liquefying enzyme is added and it is further cooled to the temperature required for a saccharificating enzyme, and the saccharificating enzyme is added, then the mixture is separated and the solution is directed to alcoholic fermentation and/or yeast fermentation, while pre-processed stalks are directed to delignification.

3. The method according to claim 1 **characterised in that** delignification is run in a multistage process, most advantageously in three stages, and where digesting liquor flows through subsequent stages in continuous system, and fresh digesting liquor is contacted with stalks of fibre crops in last stage, while fresh stalks of fibre crops are contacted with most spent digesting liquor, and where the content of carbohydrates soluble in digesting liquor after first step of delignification in terms of mass fraction amounts to 10% up to 15%, whereas after last step of delignification to 30% up to 35%.

4. The method according to claim 1 **characterised in that** after delignification run with a solution of sodium and/or potassium bisulphate (VI) followed by rinsing in water, the cellulose pulp is rinsed with a solution of mass concentration of 30% to 50% of sodium and/or potassium bisulphate (IV), containing from 0.1% to 0.3% (mass fraction) of magnesium ions Mg⁺², and then again it is rinsed with water.

5. The method according to claim 1 **characterised in that** spent digesting liquor after purification with a mixture of calcium oxide and magnesium oxide is saturated with carbon dioxide to pH 7.0±0.5, and subsequently precipitated deposit of calcium carbonate is removed, while clear solution is concentrated to concentration of at least 35%, the crystals of sodium hydrogen carbonate are isolated and the solution is directed to alcoholic fermentation and/or to yeast fermentation.

6. The method according to claim 1 **characterised in that** after isolation of yeast from the solution, the milk of lime is added to reach pH above 8.5, then precipitated deposit is removed and added to the yeast pulp, whereas clear fluid is saturated with carbon dioxide, and calcium carbonate precipitated in the process is isolated, then clear fluid is directed to preparation of digesting liquor, delignification, cellulose rinsing and pre-souring of stalks.

## Amended claims

### Amended claims in accordance with Rule 137(2) EPC.

**1.** A method to process stalks of fibre crops (plants), specifically, of the hemp and/or the flax, including the manufacture of cellulose, ethanol, and yeast, in which the processes of sulphite or sulphate delignification, fermentation, and purification using a digesting liquor are applied and during which the cellulose is isolated and washed and the digesting liquor is subject to alcoholic fermentation, and a broth from the distillation of ethanol is subject to yeast fermentation; the yeasts are removed and the solution is purified, wherein the delignification process is carried out at a temperature ranging from 110° C to 180° C using a digesting liquor, i.e. a solution of sodium and/or potassium bisulphate (IV) or a solution of sodium and/or potassium bisulphate (VI) of a pH value between 1 and 13.5, and the content of Mg⁺² therein is from 0.01% to 0.03% (mass fraction), and this delignification process continues until the content of soluble carbohydrates in the digesting liquor is above 30% (mass fraction); thereafter, the cellulose is isolated, the spent digesting liquor is treated with a mixture of calcium oxide and magnesium oxide, where the content of magnesium oxide in the mixture is between 30% and 70% (mass fraction) and the amount of the mixture is between 20 kg and 70 kg per 1m³ of the digesting liquor; and, after the separation of the precipitated deposit, a clear fluid undergoes the alcoholic fermentation process; the deposit is burned, and the combustion gases produced are returned to the delignification process, and the ash is returned in order to be utilized in the purification of the spent digesting liquor and, also, as a supplementary source of Ca⁺² and Mg⁺² ions in the fresh digesting liquor.

**2.** The method according to Claim 1, wherein the stalks of the fibre plants are boiled, prior to the delignification process, for 0.5 to 2 hours, at a temperature not lower than 100° C, in the water containing 25% ammonia liquor added in the amount between 5 dm³ to 15 dm³ per 1000 kg of stalks, and, next, they are cooled to a temperature of 28°C and treated with acid whey the amount of which ranges from 80 dm³ to 120 dm³ per 1000 kg; next, they are soured, and, subsequently, water is added to the ensilage produced and the ensilage with the water added is boiled for 0.5 to 2 hours at a temperature not lower than 110° C; then, the whole is cooled to a temperature as required for a liquefying enzyme, preferably an alpha-amylase, which is added to the whole mixture; thereafter, the whole mixture is further cooled to a temperature as required for a saccharifying enzyme, preferably a glucoamylase, which is added to it, and the whole mixture is separated; as next, the solution undergoes the alcoholic fermentation and/or yeast fermentation processes, and the pre-processed stalks undergo the delignification process.

**3.** The method according to Claim 1, wherein the delignification process is carried out as a multistage process, preferably, as a three stage process. The digesting liquor flows through subsequent stages in a continuous system, and the fresh digesting liquor contacts the fibre plant stalks during the last stage; the fresh fibre plant stalks contact the most spent digesting liquor. After the first step of the delignification process, the content of the carbohydrates soluble in the digesting liquor is between 10% and 15% (mass fraction), and after the last step of the delignification process, this content is between 30% and 35%.

**4.** The method according to Claim 1, wherein, after the removal of lignin from the cellulose with the use of sodium and/or potassium bisulphate (VI) solution, and after the cellulose pulp has been water-washed, it is again washed using a sodium and/or potassium bisulphate (IV) solution of 30% to 50% mass concentration, whereas the said solution contains Mg²⁺ ions the amount of which is between 0.1% and 0.3% (mass fraction), and, then, the cellulose pulp is, again, water-washed.

**5.** The method according to Claim 1, wherein the spent digesting liquor, after having been purified with a mixture of calcium oxide and magnesium oxide, is saturated with a carbon dioxide to a pH value of 7.0±0.5, and, subsequently, the precipitated calcium carbonate deposit is removed and a clear solution is concentrated to a concentration level of at least 35%, and the crystals of sodium hydrogen carbonate are isolated, and the solution undergoes the alcoholic fermentation and/or the yeast fermentation processes.

**6.** The method according to Claim 1, wherein, after the yeasts are isolated from the solution, the whitewash is added to the solution in order to increase the pH value to a level above 8.5; then, the deposit precipitated is removed and added to the yeast pulp, and the clear fluid is saturated with a carbon dioxide, the calcium carbonate precipitated during the ongoing process is isolated, and the clear fluid is utilized in many ways: to prepare digesting liquor, in the cellulose delignification process, to wash the cellulose, and to presour the fibre plant stalks.
